## Europäisches Patentamt

## European Patent Office

## Office européen des brevets

(19)

(11) Veröffentlichungsnummer : **0 137 138**
**B1**

(12)

# EUROPÄISCHE PATENTSCHRIFT

(45) Veröffentlichungstag der Patentschrift :
**09.11.88**

(21) Anmeldenummer : **84108105.2**

(22) Anmeldetag : **11.07.84**

(51) Int. Cl.⁴ : **C 08 F114/00**

(54) **Verfahren zur Herstellung von Suspensions-Polyvinylchlorid, welches zur Spritzgiessverarbeitung geeignet ist.**

(30) Priorität : **08.09.83 DE 3332376**

(43) Veröffentlichungstag der Anmeldung :
**17.04.85 Patentblatt 85/16**

(45) Bekanntmachung des Hinweises auf die Patenterteilung : **09.11.88 Patentblatt 88/45**

(84) Benannte Vertragsstaaten :
**BE CH DE FR GB IT LI NL SE**

(56) Entgegenhaltungen :
**DE-A- 1 943 638**
**DE-A- 2 606 934**

(73) Patentinhaber : **HÜLS AKTIENGESELLSCHAFT**
**- RSP Patente / PB 15 - Postfach 13 20**
**D-4370 Marl 1 (DE)**

(72) Erfinder : **Bieringer, Heimo, Dr.**
**Friedholt 20**
**D-4281 Raesfeld-Erle (DE)**
Erfinder : **Engler, Martin**
**Tulpenstrasse 5**
**D-4370 Marl (DE)**
Erfinder : **Holtrup, Wolfgang**
**Oderbruchstrasse 24**
**D-4370 Marl (DE)**

EP 0 137 138 B1

# 0 137 138

## Beschreibung

Der Gegenstand der Erfindung ist ein Verfahren zur Herstellung von Polyvinylchlorid mit verbesserter Verarbeitbarkeit insbesondere beim Spritzgießen. Es hat in der Vergangenheit nicht an Versuchen gefehlt, die Verarbeitbarkeit von Vinylchloridpolymerisaten zu verbessern, d. h. die Viskosität der Polymerschmelze zu erniedrigen, die bei gegebener Temperatur und Schergeschwindigkeit abhängig ist von der mittleren Molmasse und der Molmassenverteilung des Polyvinylchlorids. So kann man durch Verwendung von Polyvinylchlorid mit niedriger mittlerer Molmasse bei enger Molmassenverteilung leichtfließende Polymerschmelzen erhalten, die aber bekanntlich schlechte mechanische Eigenschaften als Fertigteil aufweisen (Pol. Eng. Sci. 17 (1977), 194 ff.). Es sind auch Verfahren bekannt, die Molmassenverteilung des Polyvinylchlorids zu verbreitern. So wird gemäß der DE-OS 26 51 532 eine mechanische Mischung von Polyvinylchlorid-Pulvern mit unterschiedlichen mittleren Molmassen vorgenommen. Dieses Verfahren ist in der Technik jedoch aufwendig und ergibt Pulver, die auf Spritzgießmaschinen nur dann zu glatten Fertigteiloberflächen verarbeitbar sind, wenn die mittleren Molmassen der Mischkomponenten nicht allzu verschieden sind. Die dabei erreichbare Senkung der Schmelzviskosität ist aber gering. Mischt man dagegen zwei Pulver mit sehr unterschiedlichen mittleren Molmassen ab, so ergeben sich Polyvinylchlorid-Fertigteile mit rauhen Oberflächen und Fließlinien. Die Ursache dafür liegt in der Heterogenität des Pulvers. Die sehr niedermolekularen Polyvinylchlorid-Körner schmelzen in der Plastifizierzone der Spritzgießmaschine schneller als die hochmolekularen Polyvinylchlorid-Körner, reduzieren die Schmelzviskosität und verschlechtern dadurch, ähnlich einem zu hohen Zusatz eines Gleitmittels, den Plastifiziervorgang für die hochmolekularen Polyvinylchlorid-Körner, die zu den Fehlern am Fertigteil führen.

Der Nachteil der Pulverheterogenität hinsichtlich der Molmasse wird im Verfahren der DE-OS 26 06 934 vermieden. Dieses benützt die Möglichkeit der Variation der Molmasse bei der Vinylchlorid-Suspensionspolymerisation durch gleichzeitige Anwesenheit von regelnden (die Molmasse senkenden) und verzweigenden (die Molmasse erhöhenden) Stoffen. Die dabei erreichbare Reduzierung der Polyvinylchlorid-Schmelzviskosität steht mit den Einsatzmengen der regelnden und verzweigenden Komponenten in einem Zusammenhang. Je höher die Mengen, umso geringer die Schmelzviskosität. Es ist aber nach diesem Verfahren nicht möglich, aus Pulvermaterial mit reduzierter Schmelzviskosität Polyvinylchlorid-Formteile zu spritzen, die eine einwandfrei glatte Oberflächenbeschaffenheit haben, wie Versuche gezeigt haben. Die Ursache dafür liegt in der Natur der verzweigenden Komponente. Diese bewirkt bei den zur Reduzierung der Schmelzviskosität notwenigen hohen Mengen bei der Vinylchlorid-Polymerisation auch eine Vernetzung der Makromoleküle. Dies kann leicht überprüft werden, indem man eine Lösung eines derartigen Polyvinylchlorid-Pulvers in z. B. Cyclohexanon herstellt, weil darin die vernetzten Makromoleküle als unlösliche Gelpartikelchen zurückbleiben. Derartig vernetzte Anteile im Pulver verhindern aber beim Spritzgießen die Entstehung einer erwünschten glatten, fließlinienfreien Fertigteiloberfläche.

Dieser Nachteil wird im Verfahren der DE-OS 19 43 638 vermieden, welches den Einsatz von verzweigenden Komponenten vermeidet. Eine Verbreiterung der Molmassenverteilung wird hier erzielt durch Polymerisation bei mindestens zwei verschiedenen Temperaturen, gegebenenfalls unter Anwesenheit einer auf die Molmasse regelnd wirkenden Substanz. Die dabei erzielte Verringerung der Schmelzviskosität für Produkte mit gleicher mittlerer Molmasse beträgt aber nur ca. 10 %.

Es wurde nun gefunden, daß sich Polyvinylchlorid-Produkte herstellen lassen, die eine wesentlich stärker verringerte Schmelzviskosität zeigen als Polyvinylchlorid-Homopolymere mit der gleichen mittleren Molmasse, und die sich zu Fertigteilen mit glatten Oberflächen spritzgießen lassen, wobei kein Verlust der physikalischen Eigenschaften auftritt, wenn ein Suspensions-Polyvinylchlorid durch Polymerisation bei zwei oder mehreren Temperaturen hergestellt wird in Gegenwart von öllöslichen Initiatoren, Suspensionsstabilisatoren und Reglersubstanzen, wobei man die Reglersubstanz als einmaliger Zusatz dem Polymerisationsgemisch bei einem Vinylchlorid-Umsatz $\geq 20$ Gewichtsprozent und $\leq 70$ Gewichtsprozent zugibt und die Temperatur nach Beendigung der ersten Polymerisationsstufe ansteigen läßt.

Die Polymerisation soll, wie üblich, bis zu einem Enddruck von 12 bis 5 bar bzw. bis zu einem Umsatz von 80 bis 95 % durchgeführt werden.

Die Zugabe des Reglers erfolgt zweckmäßigerweise über eine Dosierschleuse in den Polymerisationskessel durch Anlegen eines leichten Überdrucks. Bei Vorhandensein von Dosierpumpen können diese ebensogut verwendet werden. Die Zeitdauer der Reglerzugabe ist unkritisch, sollte aber 15 Minuten nicht überschreiten.

In dem erfindungsgemäßen Verfahren können alle bekannte, auf die radikalische Vinylchloridpolymerisation regelnd wirkenden Substanzen eingesetzt werden, beispielsweise unsubstituierte oder substituierte aliphatische Aldehyde, gesättigte oder ungesättigte Chlorkohlenwasserstoffe, u. a. Vom Gebrauch schwefelhaltiger Regler sollte abgesehen werden, da diese bei der Konfektionierung des Polyvinylchlorids insofern zu Schwierigkeiten führen, weil sie mit den häufig verwendeten Pb-Stabilisatoren schwer verträglich sind. Als besonders geeignet haben sich gesättigte und ungesättigte Chlorkohlenwasserstoffe erwiesen, z. B. Trichlorethylen, Dichlorethylen, 1-Chlor-2-methyl-prop-1-en, 3-Chlor-2-methyl-prop-1-en, weil sie aufgrund ihrer hohen Flüchtigkeit leicht aus dem Polyvinylchlorid und dem an die Umwelt zurückgeführten Suspensionswasser zu entfernen sind und weil sie kostengünstig aus dem bei der Polyvinylchlorid-Entgasung anfallenden Rück-Vinylchlorid entfernbar sind. Es können auch Gemische mehrerer Reglersubstanzen verwendet werden.

Die Menge des zugesetzten Reglers hängt von dessen Wirksamkeit bei der Molmassenerniedrigung ab. Ein quantitatives Maß dafür ist die Kettenübertragungskonstante, die für das System Vinylchlorid/Regler tabelliert ist in z. B. Encyclop. of Pol. Sci. Tech., Band 14, 332. Die Zusatzmenge sollte allgemein im Bereich von 0,1 bis 10 Gewichtsprozent liegen, vorzugsweise 1 bis 6 Gewichtsprozent, insbesondere 3 bis 5 Gewichtsprozent. Bei einer hohen Kettenübertragungskonstante wird sich die erforderliche Menge an Regler erheblich vermindern lassen.

Der Zusatzzeitpunkt des Reglers, der die mittlere Molmasse des Polyvinylchlorids und auch das Ausmaß der Verringerung der Schmelzviskosität beeinflußt, soll so gewählt werden, daß der Vinylchlorid-Umsatz zwischen ≥ 20 und ≤ 70 Gewichtsprozent, vorzugsweise ≥ 25 und ≤ 50 Gewichtsprozent, liegt. Eine weitere Einflußgröße für den Zusatzzeitpunkt des Reglers ist die Temperaturführung während der Polymerisation. Diese soll so verlaufen, daß die Polymerisation bei zwei oder mehreren Temperaturen durchgeführt wird, wobei die Temperatur von Stufe zu Stufe oder kontinuierlich ansteigen soll. In einer bevorzugten Ausführungsform werden nur zwei, aber weit auseinanderliegende Temperaturstufen zwischen 25 bis 54 °C und zwischen 55 bis 80 °C gewählt, wobei der Regler kurz vor Beendigung der ersten Polymerisationsstufe bzw. Temperaturstufe zugegeben wird. Eine Zeitdauer von 5 bis 15 Minuten zwischen Ende der Reglerzugabe und Beginn der Temperatursteigerung ist ausreichend, damit der Regler vor Beginn der Temperatursteigerung gleichmäßig in der Polymersuspension verteilt ist. (Würde der Regler nach Beendigung der Temperatursteigerung bei höherer Polymerisationstemperatur zugegeben, so würde dies zu Schwierigkeiten bei der Wärmeabfuhr des Kessels führen, weil ohne Anwesenheit des Reglers bei hohen Temperaturen durch den schnelleren Zerfall der Initiatoren die Polymerisationsgeschwindigkeit des Vinylchlorids stark zunimmt, was besonders in großen Reaktoren zu einem Durchgehen des Kessels führen kann.)

Die durchschnittliche Molmasse des Polyvinylchlorids verhält sich reziprok zur Polymerisationstemperatur. Je größer die Temperaturdifferenz der Polymerisationsstufen ist, umso mehr wird sich die Molmassenverteilung des Polyvinylchlorids verbreitern. Andererseits ist die Zerfallsgeschwindigkeit der radikalischen Initiatoren nach dem Gesetz von Arrhenius exponentiell von der reziproken Temperatur abhängig. Im Interesse wirtschaftlicher Raum-Zeit-Ausbeuten wählt man die Anfangspolymerisationstemperatur daher zweckmäßig zwischen 25 bis 54 °C, vorzugsweise 35 bis 50 °C, und erhöht dann entweder stufenweise oder kontinuierlich (≥ 0,01 °C/min und ≤ 5 °C/min) die Temperatur auf 55 bis 80 °C, vorzugsweise 65 bis 75 °C.

Es können alle für die Vinylchloridpolymerisation bekannten öllöslichen radikalischen Initiatoren eingesetzt werden, wie beispielsweise Acetylcyclohexylsulfonylperoxid, Alkylperneodecanoat, Di-alkylperoxodicarbonat, Dilaurylperoxid, Azodiisobutyronitril, Alkylperpivalat.

Der Initiator sollte in Konzentrationen von 0,01 bis 1, vorzugsweise 0,05 bis 0,5 Gewichtsprozent eingesetzt werden. Es empfiehlt sich aber, Kombinationen von mindestens zwei Initiatoren einzusetzen, deren Halbwertszeiten den gewählten Polymerisationstemperaturstufen so angepaßt sind, daß diese zwischen 1 bis 10 Stunden liegen. Dadurch wird ein gleichmäßiger Vinylchlorid-Umsatz pro Zeiteinheit erreicht, ohne daß während der Polymerisation noch weiterer Initiator zugesetzt werden muß. Beispiele für besonders geeignete Initiatoren sind Kombinationen von Di-alkyl-peroxodicarbonaten oder Acetylcyclohexylsulfonylperoxid oder Alkylperneodecanoat mit Dilaurylperoxid oder Azodiisobutyronitril.

Als Suspensionsstabilisatoren sind alle für die Vinylchlorid-Polymerisation bekannten und üblicherweise eingesetzten Verbindungstypen, wie sie z. B. in der Monographie Kainer, Polyvinylchlorid und Vinylchlorid-Mischpolymerisate, Springer-Verlag, Berlin/Heidelberg/New York (1965), Seite 16 ff. beschrieben sind, geeignet. Als weitere Hilfsstoffe sind gegebenenfalls pH-Puffersubstanzen, wie Ammoniumsalze, Alkalicarbonate, Hilfsstoffe gegen Wandabscheidungen, Antioxidantien, zu verwenden. Zur weiteren Erläuterung der Erfindung dienen die folgenden Beispiele. Die angegebenen Teile sind Gewichtsteile.

Beispiel 1

Ein mit Impellerrührer und Pfaudlerstromstörer ausgerüsteter 40 l-Polymerisationskessel aus rostfreiem Stahl wurde mit folgenden Bestandteilen beschickt: 20 000 Teile Wasser, welches gelöst enthält 15 Teile eines teilverseiften Polyvinylacetats (72 Mol-% Hydrolysegrad, Viskosität 5 mPas, gemessen als 4 gewichtsprozentige wäßrige Lösung bei 20 °C mit Höppler-Kugelfall-Viskosimeter und in welchem dispergiert sind: 10 Teile Dilaurylperoxid und 15 Teile Dicetylperoxodicarbonat. Der Kessel wurde geschlossen, mit Stickstoff gespült, evakuiert, der Rührer auf eine Drehzahl von 280 min⁻¹ eingestellt und anschließend mit 10 000 Teilen Vinylchlorid (VC) beschickt. Der Kessel wurde mit einer Geschwindigkeit von 0,8 °C/min auf 43 °C aufgeheizt, worauf die Polymerisation einsetzte. Nach 5,5 Stunden war ein Vinylchlorid-Umsatz von 38 Gewichtsprozent erreicht und es wurden 300 Teile Methallylchlorid über eine Druckschleuse zugegeben. 15 Minuten nach erfolgter Reglerzugabe wurde der Inhalt auf 74 °C mit einer Geschwindigkeit von 0,8 °C/min aufgeheizt und bei dieser Temperatur bis zu einem Enddruck von 10 bar polymerisiert. Das Produkt wurde nach Entgasung von größten Teil des Wassers getrennt und bei 50 °C

**0 137 138**

im Wirbelbetttrockner getrocknet. Man erhält ein Suspensions-Polyvinylchlorid mit einem K-Wert von 58,5. Wie aus der Tabelle 1 zu entnehmen ist, zeigt das Produkt beim Spritzgießen gegenüber einem Suspensions-Polyvinylchlorid mit K-Wert 58 eine wesentlich höhere Fließfähigkeit und läßt sich zu transparenten Formkörpern mit glatter Oberfläche verarbeiten.

## Beispiel 2

Es wurde wie in Beispiel 1 verfahren, jedoch wurden als Initiator nur 15 Teile Dicetylperoxodicarbonat verwendet. Bei einem Vinylchlorid-Umsatz von 34 Gewichtsprozent wurden 400 Teile Trichlorethylen zugegeben und der Kessel anschließend auf 74 °C aufgeheizt. Man erhält bei Polymerisation bis zu einem Enddruck von 7 bar ein Produkt mit einem K-Wert von 55,5 und einer hohen Fließfähigkeit, wie aus der Tabelle 1 zu entnehmen ist.

## Beispiel 3

Es wurde wie in Beispiel 1 verfahren, jedoch wurden als Initiatoren 13 Teile Dilaurylperoxid und 11 Teile Dicetylperoxodicarbonat verwendet und der Kessel auf 54 °C aufgeheizt. Beim Vinylchlorid-Umsatz von 60 Gewichtsprozent wurden 400 Teile Methallylchlorid zugesetzt und der Kessel anschließend auf 74 °C aufgeheizt. Man erhält ein Produkt mit einem K-Wert von 57,5 und einer hohen Fließfähigkeit, wie aus der Tabelle 1 zu entnehmen ist.

## Vergleichsbeispiel A

Es wurde wie in Beispiel 1 verfahren, jedoch wurde nach 11 Gewichtsprozent Vinylchlorid-Umsatz der Kessel von 43 °C auf 74 °C aufgeheizt, ohne daß ein Regler zugegeben wurde. Man erhält bei Polymerisation bis zu einem Enddruck von 7 bar ein Produkt mit einem K-Wert von 57, aber einer geringen Fließfähigkeit, wie aus der Tabelle 1 zu entnehmen ist.

## Vergleichsbeispiel B

Es wurde wie in Beispiel 3 verfahren, jedoch wurden bei 59 Gewichtsprozent Vinylchlorid-Umsatz 300 Teile Methallylchlorid zugesetzt und die Polymerisation weiterhin bei 54 °C bis zu einem Enddruck von 7 bar durchgeführt. Wie aus der Tabelle 1 zu entnehmen ist, zeigt das Produkt mit einem K-Wert von 58,5 nur eine gering verbesserte Fließfähigkeit gegenüber dem Suspensions-Polyvinylchlorid mit einem K-Wert von 58.

## Beispiel 4

Ein mit Impellerrührer und Pfaudlerstromstörer ausgerüsteter 40 l-Polymerisationskessel aus rostfreiem Stahl wurde mit folgenden Bestandteilen beschickt : 20 000 Teile Wasser, welches gelöst enthielt 13 Teile eines teilverseiften Polyvinylacetats (72 Mol-% Hydrolysegrad, Viskosität 5 mPas, gemessen als 4 gewichtsprozentige wäßrige Lösung bei 20 °C mit Höppler-Kugelfall-Viskosimeter und in welchem 10 Teile Dilaurylperoxid und 5 Teile Cumylperneodecanoat dispergiert wurden. Der Kessel wurde geschlossen, mit Stickstoff gespült, evakuiert, der Rührer auf eine Drehzahl von 280 $min^{-1}$ eingestellt und anschließend mit 10 000 Teilen Vinylchlorid beschickt. Der Kessel wurde mit einer Geschwindigkeit von 0,8 °C/min auf 35 °C und sofort anschließend mit 0,0833 °C/min entsprechend einer Zeit von 8 Stunden auf 75 °C aufgeheizt. Bei einem Vinylchlorid-Umsatz von 30 Gewichtsprozent wurden 300 Teile Trichlorethylen über eine Druckschleuse zugegeben ; sofort anschließend wurde der Kessel kontinuierlich weiter aufgeheizt und bei 75 °C bis zu einem Enddruck von 7 bar polymerisiert. Das Produkt wurde nach Entgasung vom größten Teil des Wassers getrennt und bei 50 °C im Wirbelbetttrockner getrocknet. Der K-Wert des Produkts beträgt 55. Wie aus der Tabelle 2 zu entnehmen ist, zeigt das Produkt beim Spitzgießen gegenüber dem Suspensions-Polyvinylchlorid mit einem K-Wert von 58 eine höhere Fließfähigkeit und läßt sich zu transparenten Formkörpern mit glatter Oberfläche verarbeiten.

## Beispiel 5

Es wurde wie in Beispiel 4 verfahren, jedoch wurden bei einem Vinylchlorid-Umsatz von 41 Gewichtsprozent 400 Teile Methallylchlorid zugegeben. Es wurde bis zu einem Enddruck von 12 bar polymerisiert. Man erhält ein Produkt mit einem K-Wert von 57,5 und einer hohen Fließfähigkeit, wie aus der Tabelle 2 zu entnehmen ist.

## Vergleichsbeispiel C (gemäß DE-OS 19 43 638)

Ein mit Impellerrührer und Pfaudlerstromstörer ausgerüsteter 40 l-Polymerisationskessel aus rostfreiem Stahl wurde mit folgenden Bestandteilen beschickt : 20 000 Teile Wasser, welches gelöst enthielt

4

**0 137 138**

15 Teile eines teilverseiften Polyvinylacetats gemäß Beispiel 1 und in welchem dispergiert sind 10 Teile Dilaurylperoxid und 20 Teile Dicetylperoxodicarbonat. Der Kessel wurde geschlossen, mit Stickstoff gespült, evakuiert, der Rührer auf eine Drehzahl von 280 min$^{-1}$ eingestellt und anschließend mit einer Mischung aus 150 Teilen Methallylchlorid und 10 000 Teilen Vinylchlorid beschickt. Der Kessel wurde mit einer Geschwindigkeit von 0,8 °C/min auf 43 °C aufgeheizt und nach 7 Stunden Polymerisation mit 0,8 °C/min auf 65 °C aufgeheizt. Bei einem Enddruck von 5 bar wurde das Produkt entgast, vom größten Teil des Wassers getrennt und bei 50 °C im Wirbelbetttrockner getrocknet. Der K-Wert des Produkts ist 55,5. Wie aus der Tabelle 1 zu entnehmen ist, ist die Fließverbesserung dieses Produkts gering.

Vergleichsbeispiel D (gemäß DE-OS26 06 934)

Ein mit Impellerrührer und Pfaudlerstromstörer ausgerüsteter 40 l-Polymerisationskessel aus rostfreiem Stahl wurde mit folgenden Bestandteilen beschickt : 20 000 Teile Wasser, welches gelöst enthielt 20 Teile eines teilverseiften Polyvinylacetats gemäß Beispiel 1 und in welchem dispergiert sind 40 Teile Dilaurylperoxid und 40 Teile Dicetylperoxodicarbonat. Der Kessel wurde geschlossen, mit Stickstoff gespült, evakuiert, der Rührer auf eine Drehzahl von 280 min$^{-1}$ eingestellt und anschließend eine Mischdung aus 400 Teilen Methallylchlorid, 50 Teilen Diallylphthalat und 10 000 Teilen Vinylchlorid beschickt. Der Kessel wurde mit 0,8 °C/min auf 54 °C aufgeheizt und bis zu einem Enddruck von 5 bar polymerisiert. Das Produkt wurde nach Entgasung vom größten Teil des Wassers getrennt und bei 50 °C im Wirbelbetttrockner getrocknet. Der K-Wert des Produkts beträgt 56. Wie aus der Tabelle 2 zu entnehmen ist, hat das Produkt eine gute Fließfähigkeit, aber die daraus hergestellten Formkörper zeigen eine rauhe Oberfläche mit deutlich erkennbarer Fließlinienstruktur.

(Siehe Tabellen Seite 6 ff.)

5

Tabelle 1

| | erste Polymerisationstemperatur (°C) | VC-Umsatz bei Reglerzugabe (Gew.-%) | zweite Polymerisationstemperatur (°C) | Art des Reglers [1] | Menge des Reglers (Gew.-%, bez. auf VC) | K-Wert [2] | Uneinheitlichkeit [3] | Vicat-temp. [4] (°C) | Spiral-länge [5] (cm) | Oberfläche des Fertigteils | Transparenz des Fertigteils |
|---|---|---|---|---|---|---|---|---|---|---|---|
| Standard Suspensions-PVC | - | - | - | - | - | 58 | 1,1 | 76 | 28,5 | glatt | ja |
| Beispiel 1 | 43 | 38 | 74 | A | 3 | 58,5 | 6,0 | 71 | 54 | glatt | ja |
| Beispiel 2 | 43 | 34 | 74 | B | 4 | 55,5 | 4,0 | 75 | 47 | glatt | ja |
| Beispiel 3 | 54 | 60 | 74 | A | 4 | 57,5 | 5,0 | 70 | 44 | glatt | ja |
| Vergleichs-beispiel A | 43 | - | 74 | - | - | 57 | 1,5 | 75 | 32 | glatt | ja |
| Vergleichs-beispiel B | 54 | 59 | 54 | A | 3 | 58,5 | 4,0 | 71 | 38,5 | glatt | ja |
| Vergleichs-beispiel C | 43 | 0 | 65 | A | 1,5 | 55,5 | - | 72 | 38 | glatt | ja |

[1] A.. Methallylchlorid B.. Trichlorethylen

[2] DIN 53 726

[3] Gelchromatographisch bestimmte mittlere Molmassen $\bar{M}_w$, $\bar{M}_n$, umgerechnet mittels der Beziehung : Uneinheitlichkeit = $(\bar{M}_w/\bar{M}_n) - 1$

[4] DIN 53 460 (VST/B/50)

[5] Praxisnahe Prüfung der Fließfähigkeit : 100 Teile PVC werden mit 2,5 Teilen eines Ba/Cd-Stabilisators und gegebenenfalls rezepturüblichen Mengen eines Gleitmittels in einem Schnellmischer gemischt. Diese Mischung wird auf einer Spritzgießmaschine zu Spiralen mit einem rechteckigen Querschnitt (20 mm breit, 2 mm hoch) verarbeitet. Die Länge (in cm) der Spiralen wird als Maß der Fließfähigkeit des Produkts ausgewertet.

6

Tabelle 2

| | Anfangstemperatur (°C) | Temperaturveränderungsgeschwindigkeit (°C/min) | Endtemperatur (°C) | VC-Umsatz bei Reglerzugabe (Gew.-%) | Art und Menge des Reglers (Gew.-%, bez. auf VC[1]) | Art und Menge des Vernetzers (Gew.-%, bez. auf VC) | K-Wert[2] | Vicaterweichungstemp. (°C) | Spiral-länge[4] (cm) | Oberfläche des Fertigteils | Transparenz des Fertigteils |
|---|---|---|---|---|---|---|---|---|---|---|---|
| Beispiel 4 | 35 | 0,0833 | 75 | 30 | 3 B | ohne | 58 | 76 | 44 | glatt | ja |
| Beispiel 5 | 35 | 0,0833 | 75 | 41 | 4 A | ohne | 57,5 | - | 50 | glatt | ja |
| Vergleichsbeispiel D | 54 | 0,0 | 54 | 0 | 4 A | 0,5 Diallyl-phthalat | 56[5] | 75 | 48 | rauh-matt | opake Zonen mit Fließlinienstruktur |

1) A.: Methallylchlorid B.: Trichlorethylen
2) DIN 53 726
3) DIN 53 460 (VST/B/50)
4) siehe Fußnote 5 zu Tabelle 1
5) Produkt enthält in Cyclohexanon unlösliche Gelanteile

**Patentansprüche**

1. Verfahren zur Herstellung von Suspensions-Polyvinylchlorid, welches zur Spritzgießverarbeitung geeignet ist, durch Polymerisation bei verschiedenen Polymerisationstemperaturen in Gegenwart von öllöslichen Initiatoren, Suspensionsstabilisatoren und Reglersubstanzen, dadurch gekennzeichnet, daß man die Reglersubstanz als einmaliger Zusatz dem Polymerisationsgemisch bei einem Vinylchlorid-Umsatz $\geq 20$ Gewichtsprozent und $\leq 70$ Gewichtsprozent zugibt und die Temperatur nach Beendigung der ersten Polymerisationsstufe ansteigen läßt.

2. Verfahren nach Anspruch 1, dadurch gekennzeichnet, daß die Reglersubstanz dem Polymerisationsgemisch bei einem Vinylchlorid-Umsatz $\geq 25$ Gewichtsprozent und $\leq 50$ Gewichtsprozent zugegeben wird.

3. Verfahren nach den Ansprüchen 1 und 2, dadurch gekennzeichnet, daß die Gesamtmenge der regelnd wirkenden Stoffe zwischen 0,1 bis 10 Gewichtsprozent beträgt.

4. Verfahren nach den Ansprüchen 1 bis 3, dadurch gekennzeichnet, daß die Polymerisation bei zwei oder mehreren Temperaturen durchgeführt wird.

5. Verfahren nach den Ansprüchen 1 bis 4, dadurch gekennzeichnet, daß die Polymerisationstemperatur stufenweise ansteigt.

6. Verfahren nach den Ansprüchen 1 bis 5, dadurch gekennzeichnet, daß die Polymerisation auf zwei Temperaturstufen durchgeführt wird, wobei die Anfangstemperatur zwischen 25 bis 54 °C und die Endtemperatur zwischen 55 bis 80 °C liegt.

7. Verfahren nach den Ansprüchen 1 bis 6, dadurch gekennzeichnet, daß die Änderungsgeschwindigkeit zwischen der Anfangstemperatur und der Endtemperatur 0,01 bis 5 °C/min beträgt.

8. Verfahren nach den Ansprüchen 1 bis 7, dadurch gekennzeichnet, daß $\geq 5$, aber $\leq 15$ Minuten nach Zugabe des Reglers die Temperaturänderung zur Endtemperatur mit 0,01 bis 5 °C/min vollzogen wird.

9. Verfahren nach den Ansprüchen 1 bis 8, dadurch gekennzeichnet, daß als öllösliche radikalische Initiatoren Kombinationen von mindestens zwei Initiatoren eingesetzt werden, wobei deren Halbwertszeiten den gewählten Polymerisationstemperaturstufen so angepaßt sind, daß für die jeweiligen Temperaturen die Halbwertszeiten zwischen 1 bis 10 Stunden liegen.

10. Verfahren nach den Ansprüchen 1 bis 9, dadurch gekennzeichnet, daß die Temperatur nach Beendigung der ersten Polymerisationsstufe kontinuierlich ansteigt.

**Claims**

1. A process for the production of suspension polyvinyl chloride, which is suitable for processing by injection-moulding, by polymerization at different polymerization temperatures in the presence of oil-soluble initiators, suspension stabilizers and regulator substances, characterized in that the regulator substance is addet to the polymerization mixture as a single addition at a vinyl chloride conversion of $\geq 20$ % by weight and $\leq 70$ % by weight and the temperatur is allowed to rise after the first polymerization stage has ended.

2. A process according to claim 1, characterized in that the regulator substance is added to the polymerization mixture at a vinyl chloride conversion of $\geq 25$ % by weight and $\leq 50$ % by weight.

3. A process according to claims 1 and 2, characterized in that the total quantity of the substances having a regulating action is from 0.1 to 10 % by weight.

4. A process according to claims 1 to 3, characterized in that the polymerization in carried out at two or more temperatures.

5. A process according to claims 1 to 4, characterized in that the polymerization temperature rises in steps.

6. A process according to claims 1 to 5, characterized in that the polymerization is carried out at two temperature levels, the initial temperature being from 25 to 54 °C and the end temperature being from 55 to 80 °C.

7. A process according to claims 1 to 6, characterized in that the rate of change from the initial temperature to the end temperature is 0.01 to 5 °C/minute.

8. A process according to claims 1 to 7, characterized in that, $\geq 5$ minutes but $\leq 15$ minutes after the addition of the regulator, the temperatur change to the end temperature is carried out at 0.01 to 5 °C/minute.

9. A process according to claims 1 to 8, characterized in that the oil-soluble free-radical initiators used are combinations of at least two initiators, their half lives being adapted to the selected polymerization temperature levels in such a way that the half lives are from 1 to 10 hours for the particular temperatures.

10. A process according to claims 1 to 9, characterized in that the temperature rises continuously after the first polymerization stage has been completed.

## 0 137 138

**Revendications**

1. Procédé de préparation de polychlorure de vinyle en suspension, convenant pour un façonnage par coulée par injection, consistant à polymériser à diverses températures de polymérisation, en présence d'initiateurs solubles dans les huiles, de stabilisants de suspension et de substances régulatrices, caractérisé par le fait que l'on ajoute la substance régulatrice en une fois au mélange de polymérisation pour une conversion du chlorure de vinyle supérieure ou égale à 20 % en poids et inférieure ou égale à 70 % en poids et que l'on laisse la température monter lorsque le premier stade de polymérisation est terminé.

2. Procédé selon la revendication 1, caractérisé par le fait que l'on ajoute la substance régulatrice au mélange de polymérisation pour une conversion du chlorure de vinyle supérieure ou égale à 25 % en poids et inférieure ou égale à 50 % en poids.

3. Procédé selon les revendications 1 et 2, caractérisé par le fait que la quantité globale des substances exerçant un effet régulateur est comprise entre 0,1 et 10 % en poids.

4. Procédé selon les revendications 1 à 3, caractérisé par le fait que l'on effectue la polymérisation à deux ou plusieurs températures.

5. Procédé selon les revendications 1 à 4, caractérisé par le fait que la température de polymérisation monte par paliers.

6. Procédé selon les revendications 1 à 5, caractérisé par le fait que l'on effectue la polymérisation à deux stades de température, la température de départ étant comprise entre 25 et 54 °C et la température finale entre 55 et 80 °C.

7. Procédé selon les revendications 1 à 6 caractérisé par le fait que la vitesse de variation entre la température de départ et la température finale est de 0,01 à 5 °C par minute.

8. Procédé selon les revendications 1 à 7, caractérisé par le fait que cinq minutes ou plus, mais moins de quinze minutes ou quinze minutes après l'addition du régulateur, la variation de température jusqu'à la température finale s'accomplit à raison de 0,01 à 5 °C par minute.

9. Procédé selon les revendications 1 à 8, caractérisé par le fait que l'on utilise, comme initiateurs radicalaires solubles dans les huiles, des combinaisons d'au moins deux initiateurs, leurs demi-périodes étant adaptées aux stades de température de polymérisation choisis pour qu'aux températures considérées les demi-périodes se situent entre une et dix heures.

10. Procédé selon les revendications 1 à 9, caractérisé par le fait que lorsque le premier stade de polymérisation est terminé, la température monte en continu.